# EUROPEAN PATENT APPLICATION

(11) **EP 4 760 524 A1**
(43) Date of publication of application: **17.06.2026**
(21) Application number: 24307107.3
(22) Date of filing: 13.12.2024
(51) Int. Cl.: G06F 16/24, G06F 16/28

(54) **LINEAR RECURSIVE QUERYING OVER A GRAPH DATABASE**

(71) Applicant: Dassault Systèmes, 78140 Vélizy-Villacoublay (FR)
(72) Inventor: STEL, Herman, 78946 Vélizy-Villacoublay (FR); ROULLIER, Alban, 78946 Vélizy-Villacoublay (FR)
(74) Representative: Bandpay & Greuter

(57) **Abstract**

The disclosure relates to a method for executing linear recursive queries. The method comprises obtaining a first part of the query that defines as input one or more initial conditions of query elements in a second part of the query on the RDF graph database. The method also comprises obtaining at least two clauses specifying that a second part of the query will be executed recursively. The first clause defines how an output of an execution of the second part of the query is used as an input of a next execution of the second part of the query. The second clause defines the second part of the query and comprises the query elements describing how the output of an execution is queried using (i) the input of the one or more initial conditions for an initial execution or (ii) the output of a previous execution for the next execution.

## Description

### TECHNICAL FIELD

The disclosure relates to the field of computer programs and systems, and more specifically to a computer-implemented method for executing, by a query engine, a linear recursive query on an RDF graph database.

### BACKGROUND

In-memory databases are purpose-built databases that rely primarily on memory for data storage, in contrast to databases that store data on disk or SSDs. Among such databases RDF (Resource Description Framework) graph databases are of particular interest due to their great flexibility in data modeling and data storage.

RDF graphs are a traditional data model used for the storage and the retrieval of these graphs. The RDF specification has been published by the World Wide Web Consortium (W3C) to represent information as graphs, see for example RDF 1.1 Concepts and Abstract Syntax published here: https://www.w3.org/TR/rdf11-concepts/.

The core structure of the abstract syntax used is a set of triples, each consisting of a subject, a predicate and an object. A set of such RDF triples is called an RDF graph, in which each triple is represented as a node-arc-node link. As an example, an RDF triple may have two nodes, which are the subject and the object and an arc connecting them, which is the predicate. A graph label can be added to a RDF triple to obtain an RDF quad. More information about RDF can be found here: https://www.w3.org/TR/rdf11-concepts/#data-model.

RDF applications (e.g., Computer-Aided Design, Computer-Aided Engineering, Product Lifecycle Management) usually require large number of RDF quads to store and manipulate. RDF graphs have grown to billions of quads (e.g., Uniprot 100 billion of triples, Wikidata 17 billion of triples, 3DS SIEM up to 500 billion of triples), thus impacting read and write performances and the total cost of ownership (TOC) of the storage.

A database is any collection of data (i.e., information) organized for search and retrieval. It is designed to handle large volumes of data and allows for efficient storage, retrieval and manipulation. When stored in memory, the database allows for rapid search and retrieval by a computer.

An RDF graph database is a type of database designed to store, manage, and query data structured as a graph.

Navigating and querying RDF graph databases can be challenging. An RDF database often contains highly interconnected and hierarchical data, which makes it difficult to navigate and query efficiently. The graph structure, though flexible, may become very complex as the number of quads increases.

Recursive queries in RDF graph databases involve retrieving not only direct relationships but also related data that might be several steps away in the graph. This can be particularly useful for uncovering indirect connections and understanding the broader context of the data stored in the database.

Path queries are a specific type of recursive queries that focus on finding paths between nodes in a graph. In RDF databases, these queries are often used to discover relationships between entities that are not directly connected but that can be reached through a series of intermediate nodes.

Linear recursive queries are a subset of recursive queries. And PATH queries are a subset of linear recursive queries. These queries are particularly useful for exploring hierarchical and/or sequential relationships within an RDF graph database.

In the context of industrial applications, such as the RDF applications (e.g., Computer-Aided Design, Computer-Aided Engineering, Product Lifecycle Management), linear recursive queries are used to retrieve indirect connections between the quads of the RDF database. Linear recursive queries may comprise recursive (i.e., repeated) calls of the same query on the RDF graph database.

Recursive, in this context, means that the input of a call comprises the output of the previous call. Linear recursive, in this context, means the input of a call comprises only the output of the previous call.

Executing linear recursive queries on large RDF databases comes with significant overheads for each of the repeated calls, thus impacting negatively the performance of the query engine and increasing the total cost of ownership of RDF modeling-based applications.

Within this context, there is a need for an improved computer-implemented method for executing, by a query engine, a linear recursive query on an RDF graph database.

### SUMMARY

It is therefore provided a computer-implemented method for executing, by a query engine, a linear recursive query on an RDF graph database, the method comprising:
- obtaining a first part of the query (FROM) that defines as input one or more initial conditions of at least one of query elements in a second part of the query on the RDF graph database;
- obtaining at least two clauses, the at least two clauses together specifying that the second part of the query will be executed recursively:
   -- a first clause (WITH) defining how an output of an execution of the second part of the query is used as an input of a next execution of the second part of the query, and
   -- a second clause (ON) defining the second part of the query, the second clause comprising the query elements describing how the output of an execution of the second part is queried using (i) the input of the one or more initial conditions for an initial execution of the second part of the query or (ii) the output of a previous execution of the second part of the query for the next execution of the second part of the query.

The computer-implemented method may comprise one or more of the following:
- the obtained first part of the query (FROM) comprises a first group graph pattern defining the one or more initial conditions, each initial condition comprising one or more variable(s), each variable being assigned to an initial value, the first group graph pattern being a syntactic expression;
- the output of an execution of the second part of the query comprises a set of solutions, a solution comprising a set of variables assigned to a respective set of values, the first clause (WITH):
   -- extracting one or more values from the set of solutions according to one or more expressions; and
   -- assigning the extracted one or more values to one or more respective variables used as the input of the next execution of the second part of the query;
- the second clause (ON) comprises a second group graph pattern being a syntactic expression;
- the first part of the query (FROM) is executed by a first operator (ggp_from), which assigns the one or more initial conditions; the first clause (WITH) comprises the one or more expressions for the one or more respective variables used as the input of the next execution of the second part of the query; and/or the second clause (ON) is executed by a second operator (ggp_on), which recursively executes the query elements and outputs, for each execution, a respective set of solutions;
- a gate operator (R_gate) transferring a previous set of solutions from a preceding execution to the first operator and to a begin operator (R_begin); the begin operator (R_begin) taking as input the one or more initial conditions and the previous set of solutions, combining the previous set of solutions and the one or more initial conditions, and transfers them to the second operator; an end operator (R_end) taking as input the respective set of solutions from the second operator, extracting the one or more values from the previous set of solutions according to the one or more expressions for the one or more variables used as the input of the next execution, and assigning the extracted one or more values to the one or more respective variables used as the input of the next execution of the second part of the query;
- the execution of the second part of the query is executed repeatedly:
   -- until the set of solutions is empty; and/or
   -- until a predetermined number of recursive steps is reached;
- obtaining the first clause (WITH) further comprises assigning, with a clause (AS), the extracted one or more values of the one or more expressions to the one or more respective variables, the clause (AS) being combined with the first clause (WITH);
- the linear recursive query is executed by a linear recursive pattern (RECURSE), the linear recursive pattern having a SPARQL grammar of the type:
   RECURSE
   FROM {Group Graph Pattern}
      WITH( ( Expression AS Variable ) )
      ON {Group Graph Pattern};
- the linear recursive pattern further comprises a fourth clause (FILTER), the fourth clause (FILTER) defining a filter on the set of solutions based on one or more constraints, the linear recursive pattern having a SPARQL grammar of the type:
   RECURSE
   FROM {Group Graph Pattern}
      WITH( ( Expression AS Variable ) )
      ON {Group Graph Pattern,
         FILTER (Variable + Constraint)};
- the query engine is a SPARQL query engine.

It is further provided a computer program comprising instructions, that, when executed by a processing unit, cause the computer to perform the method.

It is further provided a computer readable storage medium having recorded thereon the computer program.

It is further provided a system comprising a processor coupled to a memory, the memory having recorded thereon the computer program.

### BRIEF DESCRIPTION OF THE DRAWINGS

Non-limiting examples will now be described in reference to the accompanying drawings, where:
- FIG. 1 shows a flowchart of an example of the method;
- FIG. 2 shows an example of a system; and
- FIG. 3 shows an illustration of an RDF graph database.

### DETAILED DESCRIPTION

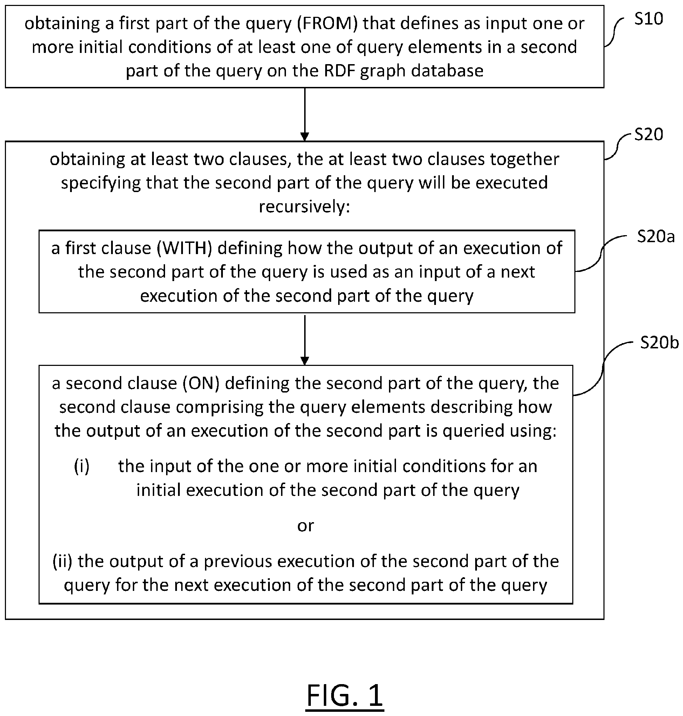

With reference to the flowchart of FIG. 1, it is proposed a computer-implemented method for executing, by a query engine, a linear recursive query on an RDF graph database. The method comprises obtaining a first part of the query (FROM) that defines as input one or more initial conditions of at least one of query elements in a second part of the query on the RDF graph database. The method also comprises obtaining at least two clauses. The at least two clauses together specify that a second part of the query will be executed recursively. The at least two clauses comprise a first clause (WITH) and a second clause (ON). The first clause (WITH) defines S20a how an output of an execution of the second part of the query is used as an input of a next execution of the second part of the query. The second clause (ON) defines the second part of the query. The second clause comprises the query elements describing how the output of an execution of the second part is queried using (i) the input of the one or more initial conditions for an initial execution of the second part of the query or (ii) the output of a previous execution of the second part of the query for the next execution of the second part of the query.

Such method provides an improved solution for executing, by a query engine, a linear recursive query on an RDF graph database. Indeed, the method amounts to a linear recursive query mechanism on an RDF graph database. The linear recursive query mechanism integrates in a single query the recurrence of repeated calls of the same query (with evolving parameters therein) on the RDF graph database, thereby significantly cutting additional computational resources and time required (often denoted as overheads of the query) due to each of these repeated calls.

Notably, the method of the present invention features the extension of the syntax and the extension of the algebra of the query engine. These extensions work on every type of query elements. The implementation of the syntax and algebra extensions allows the query engine to execute linear recursive queries on an RDF graph database. The method holds for any linear recursive query, without restrictions on specific constraints in the query and without the need to insert intermediate inputs from the user during the linear recursive query execution. For example, the method may involve filtering (e.g., with the use of FILTER in the SPARQL language) at any step of the linear recursive query, i.e., at any step during the traversal of the graph database during the linear recursive query. Consequently, the method significantly improves the execution of linear recursive queries and provides a remarkable functionality to traverse RDF graph databases in a linear recursive manner.

A query engine is a software component that allows users to interact with data stored in databases or servers by submitting queries and retrieving results. The query engine provides a set of standard operations and transformations that the user may combine in different ways through a simple query language. The query engine may be a SPARQL query engine.

A query may comprise one or more clauses, each of the one or more clauses may comprise one or more subclauses.

A recursive query is a type of query that execute a subclause one or more time where the input comprises the output of any previous steps. Recursive queries are particularly useful for traversing RDF graphs in order to retrieve hierarchical and/or graph-structured data.

A linear recursive query is a type of recursive query where each clause mentions at most of one subclause output. In other words, a linear recursive query is a type of query where the input of any recursive step depends only on the output of the previous step (and not earlier steps). Otherwise said, a linear recursive query is a type of query that traverses the graph recursively. An example of traversal of a graph path may be an RDF graph where nodes are users and edges represent relationships like "IsFriendOf". A linear recursive query might look for all friends of friends of a particular user (often called the root of the graph), effectively traversing the graph recursively to find all nodes reachable through a chain of "lsFriendOf" relationships.

Linear recursive queries are useful for traversing paths because of their linearity, i.e., the feature that the input of any recursive step depends only on the output of the previous step, thus allowing the query engine to "forget" data (e.g., not to store the data at each step of the query execution) during the execution of the linear recursive query.

The method comprises obtaining (e.g. upon user action) a first part of the query (FROM) that defines as input one or more initial conditions of at least one of query elements in a second part of the query on the RDF graph database.

A query element is a component or part of a query that specifies what data or information one wants to retrieve or manipulate. A query element may be a variable and/or a parameter of the query.

An initial condition of a query element may comprise initial values and/or constraints that may be assigned to at least one of the query elements to start the query search. Initial conditions may be inputs of the query, i.e., they may define the starting points (e.g., the root of the query) where to start executing the query and/or the starting points where to re-execute a recursive query on the RDF graph database.

The obtained first part of the query (FROM) may comprise a first group graph pattern. A group graph pattern is a set of graph patterns which allow for a combination of multiple graph patterns into a single query pattern; said otherwise, a group graph pattern specifies the set of graph patterns that must match data in the RDF graph. A graph pattern specifies the structure of the data one wants to retrieve. For the sake of an example, a graph pattern may comprise one or more triple patterns, each made up of a subject (indicating the resource or variable one wants to query), a predicate (the property or relationship one is interested in), and an object (the value or resource that the subject is related to). A graph pattern comprising a set of triple patterns where each triple consists of a subject, predicate, and object, which can include variables, is also referred to as Basic Graph Pattern (BGP).

The obtained first part of the query (FROM) may comprise at least one clause.

The at least one clause may also comprise the first group graph pattern.

The first group graph pattern may be a syntactic expression and it may define the one or more initial conditions. Each initial condition may comprise one or more variables, and each variable may be assigned to an initial value, i.e., each variable is bound to a respective initial value. Optionally, each initial condition may comprise one or more variables and one or more parameters of the query, and each variable and parameter may be assigned to an initial value.

In other words, the first group graph pattern may define an initial solution set, wherein the initial solution set may comprise one or more initial conditions, each initial condition comprising one or more variables, each variable being assigned to an initial value. In examples, a user may define as input the one or more initial conditions to be assigned to the one or more respective variables and parameters of the query.

The method also comprises obtaining at least two clauses. The at least two clauses, together, specify that a second part of the query will be executed recursively. In other words, the at least two clauses defines the recursive rules of the linear recursive query.

The at least two clauses comprise a first clause (WITH) and a second clause (ON).

The first clause (WITH) defines how an output of an execution of the second part of the query is used as an input of the next (recursive) execution of the second part of the query. In other words, the first clause (WITH) may comprise the recursive rules (e.g., a recursive parametrization) of the linear recursive query.

The second clause (ON) defines the second part of the query. The second clause comprises the query elements that describe how the output of an execution of the second part is queried using (i) the input of the one or more initial conditions for an initial execution of the second part of the query or (ii) the output of a previous execution of the second part of the query (i.e., ii) the output of a previous execution transformed according to the first clause).

The second clause may comprise a second group graph pattern, which is a syntactic expressions. The second group graph pattern may be combined with the first group graph pattern. The combined group graph patterns may comprise the query elements and the input of the next (recursive) execution of the second part of the query.

The output of an execution of the second part of the query may comprise a solution set (sometimes referred to as set of solutions).

A solution may comprise a set of variables assigned to a respective set of values, thus each solution has at most one value assigned per variable. Each solution can comprise all the individual patterns within the combined group patterns, i.e., each solution may match all the patterns within the combined group patterns.

A solutions set is a multiset of solutions. In examples, a solution set may be represented as a table (just for the sake of a visual representation of the concept of solution set in this context), wherein each column corresponds to a variable and each row corresponds to a solution. Therefore, in each row, only one value is assigned to each variable; in each column (i.e., per each variable), several values may be assigned to the same variable.

The first clause (WITH) may extract one or more values from the set of solutions according to one or more expressions. The first clause (WITH) may also comprise an expression (among the one or more expressions) for each variable (among the set of variables) used as the input of the next execution of the second part of the query. An expression may include variables, constants, functions and operators. An expression may be evaluated to obtain a respective value. The first clause (WITH) may also assign the extracted one or more values to one or more respective variables. These one or more respective variables may be used as the input of the next execution of the second part of the query. Otherwise said, the first clause (WITH) may transform a first solution set to a second solution set, i.e., each solution (represented by a certain row) in the first solution set is transformed to another solution (represented by another row) in the second solution set.

The obtaining the first clause (WITH) may further comprise assigning, with a third clause (AS) being combined with the first clause (WITH), the extracted one or more values of the one or more expressions to the one or more respective variables.

The combination of the first part of the query (FROM) -comprising the first group graph pattern- and the second clause (ON) -comprising the second group graph pattern-together with the first clause (WITH) (combined or not with the clause (AS)), which defines how an output an execution of the second part of the query (i.e., the second clause (ON)) is used as an input of a next execution of the second part of the query, amounts to a syntax extension of the query language. More precisely, and for the sake of an example with the SPARQL language, such a combination defines a new group graph pattern, identified as RecursePattern, which can be formally defined in the grammar of the SPARQL query language as RecursePattern =

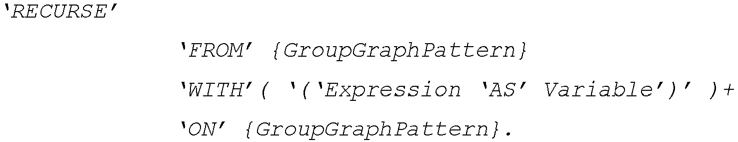

The linear recursive query amounts to an execution of the group graph pattern RecursePattern. The symbol + stands for repetition of ' *( 'Expression 'AS' Variable' ) '* in the linear recursive query.

The execution of RecursePattern is now described.

The method may further comprise a gate operator (R_gate) that may transfer a previous set of solutions (or solution set) from a preceding execution to a first operator (ggp_from) and to a begin operator (R_begin)

The first part of the query (FROM) may be executed by the first operator (ggp_from), which assigns the one or more initial conditions to the one or more respective variables (and parameters) of the query. The expression "being executed by the first operator" here means that the first part of the query is executed (or processed or acted upon) by a set of operators (of the query language) collectively named ggp_from. In other words, the action of the first operator may be effectively implemented by a first algorithm comprising a set of (basic) operators of the query language. Such algorithm may process the first part of the query (FROM), i.e., the algorithm may assign the one or more initial conditions.

The method may further comprise the begin operator (R_begin) that may take as input the one or more initial conditions and the previous set of solutions (i.e., the previous solution set). The begin operator (R_begin) may also combine the previous solution set and the one or more initial conditions, and may further transfer them (i.e., said combination) to a second operator (ggp_on).

The first clause (WITH) may comprise the one or more expressions for the one or more respective variables that are used as the input of the next execution of the second part of the query.

The second clause (ON) may be executed by the second operator (ggp_on), which recursively executes the query elements and outputs, for each execution, a respective set of solutions.

The method may further comprise an end operator (R_end) that may take as input the respective set of solutions (i.e., the respective solution set) from the (output of the) second operator, it may extract the one or more values from the previous set of solutions. The extraction of the one or more values from the previous set of solutions may be performed according to the one or more expressions for the one or more variables, comprised in the first clause (WITH), used as the input of the next execution. The end operator (R_end) may assign the extracted one or more values to the one or more respective variables used as the input for the next execution of the second part of the query.

The execution of the second part of the query may be executed repeatedly (e.g., recursively) for a predetermined number of recursive steps (e.g., 20 or 50 or 100 or 1000) and/or until the solution set is empty (e.g., there may not be values to be extracted from the previous set of solutions).

The linear recursive pattern may further comprise a fourth clause (FILTER) which may define a filter on the solution set. The filter may be based on one or more constraints on the query elements. An example in the SPARQL language may be

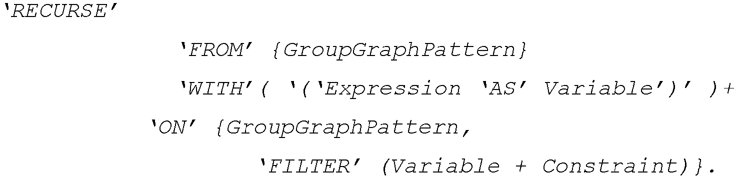

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory, the memory having recorded thereon a computer program comprising instructions, that, when executed by a processing unit, cause the computer to perform any of the methods of the present disclosure. The memory is any hardware adapted for such storage, possibly comprising several physical distinct parts (e.g. one for the program, and possibly one for the database).

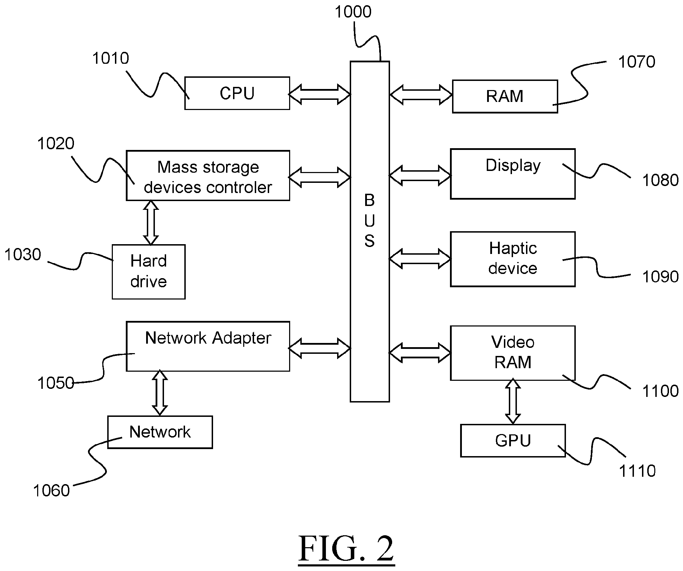

FIG. 2 shows an example of the system, wherein the system is a client computer system, e.g. a workstation of a user. The system can be used for building, maintaining, storing, using the data structure, and/or the system can be used for performing the methods of the present disclosure.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform any of the method of the present invention. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods. The computer program may alternatively be stored and executed on a server of a cloud computing environment, the server being in communication across a network with one or more clients. In such a case a processing unit executes the instructions comprised by the program, thereby causing the method to be performed on the cloud computing environment.

The method belongs to a subfield of recursive querying, which is linear recursive querying. Linear recursive querying is a field that uses a particular strategy to control the computational cost of recursive queries. This strategy may employ: (1) a syntactic expression for the recursion and/or (2) an algorithm (e.g., containing operators) that executes the syntactic expression. Points (1) and (2) may be combined or used individually to control the computational cost of recursive queries.

Examples of linear recursive querying are now provided.

Starting with the algorithm (2) that executes the recursive query, a linear recursive procedure may depend only on freshly produced data during execution, so that once data is used to produce new data, it needs not be further considered. For the sake of explanation, an example of a linear recursive procedure is now discussed, being understood that a linear recursive procedure is not limited to this example. If a user wants to retrieve the smallest components of a machine, the user may employ an algorithm that starts with the machine and looks at components listed in its composition. Now, any component of the original machine can be either one of the components just found, or a subcomponent of one of them. Hence, since the user is only interested in the smallest components, the user now investigates only the new components found. If, upon investigation, a component cannot be further decomposed, for instance in the case of a screw, the user adds it to the list of components. Otherwise, the user again decomposes the newly found component. In this way, the user only needs to consider any found component exactly once. This freedom to "forget" data during execution is very advantageous to any search operation that happens inside the execution of the algorithm.

Moving on to the syntactic expression (1) for the recursion, within the context of a particular language, a recursive query is linear if any clause mentions at most one subclause output. In the case of Datalog, for example, a Datalog rule defines an output table in terms of input tables AND output tables (only for the sake of explanation in the context of Datalog, it is assumed that the input is a table and not a graph). A Datalog program is a finite list of such rules and can be considered a query that outputs the output tables. For example:
A: Reachable(x, y) <- Reachable(x, z), Connected(z, y)
B: Reachable(x, y) <- Connected(x, y)
consist of two rules, A and B, that together define an output table Reachable with two columns, based on an input table Connected with two columns. Rule B says that if a pair (x, y) is in the input table, then it should be added to the output table. Rule A says that if one pair (z, y) is in the input table and moreover another (x, z) is already in the output table, then (x, y) should be added to the output table. Such a program is linear, according to the above definition. Indeed, all output tables, in this case only Reachable, are defined using only one output table occurrence (again, in this case only Reachable). Linear recursion in Datalog is well understood, because Datalog is a simple language. For a Datalog implementation, the corresponding algorithm is a further specialization of the (semi-naïve) algorithm, which uses the restriction in syntax to justify "forgetting" data during execution as described earlier about the algorithm (2).

Examples of expand queries are now provided.

Data models frequently define relations that may be hierarchical or recursive. For example, if a data model exposes a relation such as "A is a component of B", then it is often possible for B itself to be a component of some C, and so on. Graph databases such as RDF databases are well suited to such data models.

Given a data model containing such recursive relations, a recurrent need for the following querying pattern is observed:
- starting from some arbitrary element in the model (henceforward the root) that is part of such a hierarchy;
- query some data on the root, among which are some of its sub-elements in its hierarchy;
- query the same data on each of those sub-elements, along with their own sub-elements;
- continue until there are no more sub-elements, or some condition has been reached, or some depth has been reached.

Among the data fetched for each element (except the root) is its parent element. That information is necessary for the application to reconstruct the whole hierarchy.

Such a querying pattern has a few important characteristics:
- the link between an element and a sub-element may be complex. For example, a possible representation of a hierarchical management representation in an RDF dataset could involve two triples: <SomePerson><manages><SomeTeam> and <SomeTeam><hasMember><SomeOtherPerson>. An expand query over such a dataset must be able to query such complex relationships between elements;
- expand queries may involve filtering of various types at any step of the recursion;
- expand queries may query arbitrary data on each traversed element.

These characteristics make it impossible, for example, to express generic expand queries in standard SPARQL 1.1 queries or queries compatible with standard SPARQL 1.1 queries. Instead, all current implementations known in the art must execute several queries, incurring a significant performance overhead. Moreover, some users manually execute SPARQL queries recursively on a hierarchical model, in cases where they need the full expressivity of SPARQL to define one step of the recursion.

As an example, consider an RDF dataset containing companies that may have bought products from each other in the past. If company A bought from company B at some date, then the model contains a "sale event" with the following relationships:
<sale event 2463><hasBuyer><company A>
<sale event 2463><hasSeller><company B>
<sale event 2463><hasDate> "2018-05-01"^^xsd:date.

Given some company X, it is possible to find other companies to which it sold anything after 2020 with the following SPARQL query:

```
      SELECT ?buyer WHERE {
            ?event <hasSeller> <company X>
            ?event <hasDate> ?date
            ?event <hasBuyer> ?buyer
            FILTER (?date > "2020-01-01"^^xsd:date)
      }.
```

An example of query would be the following: find all companies Y that bought anything from company X since 2020, and all companies Z that bought anything from any company Y since 2020, and so forth. The query "SELECT ?buyer WHERE{...}" cannot be expressed in SPARQL because of the presence of FILTER in the query.

The method of the present invention extends the W3C standard SPARQL syntax and semantics admitting an encapsulation of the central component of a group graph pattern (GGP) into a "loop" that uses the output of the GGP as parameter set for the following iteration. Quoting the SPARQL specification (https://www.w3.org/TR/sparql11-query), section 5: "SPARQL is based around graph pattern matching. [...] The outer-most graph pattern in a query is called the query pattern. It is grammatically identified by GroupGraphPattern [...]".

In practical terms, a GroupGraphPattern is represented by a block enclosed by curly braces, which may contain any of the patterns that SPARQL allows in a WHERE clause.

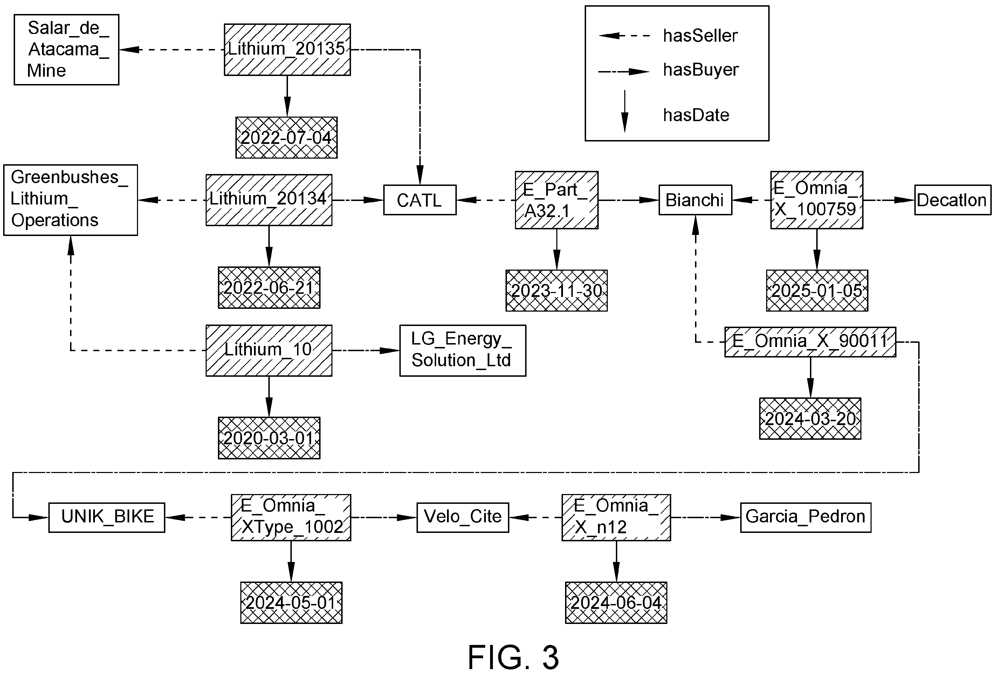

As an illustration and for the sake of an example, with reference to Fig. 3, consider the following graph database. Hereinbelow is an example of a group graph pattern:

```
      {
            ?event <hasSeller> <Greenbushes_Lithium_Operations>
            ?event <hasDate> ?date
            ?event <hasBuyer> ?buyer
            FILTER (?date > "2020-01-01"^^xsd:date)
      }
```

When executed, this group graph pattern results in a solution set, where each solution gives a value to variables (the variable is said to be bound to this value), and where solutions are allowed to appear several times in the set. In this example, with reference to Fig. 3, the resulting solution set would contain the two following solutions:

```
      {
      ( ?event -> Lithium_20134, ?date -> 2022-06-21, ?buyer -> CATL )
      (?event-> Lithium_10, ?date -> 2020-03-01, ?buyer -> LG_Energy_Solution_Ltd
 )
      }
```

An example of implementation of the method of the present disclosure is now presented. The following example makes reference to the data of the database represented in Fig. 3.

The example of implementation features the following linear recursive query in the context of the SPARQL query language:

```
      RECURSE
      FROM { VALUES ?seller { <Greenbushes_Lithium_Operations> } }
      WITH (?buyer AS ?seller)
      ON {
           ?event <hasSeller> ?seller
           ?event <hasDate> ?date
           ?event <hasBuyer> ?buyer
           FILTER (?date > "2020-01-01"^^xsd:date)
      }.
```

In this example, there are two Group Graph Patterns: one follows the 'FROM' keyword, and one follows the 'ON' keyword. Both of those Group Graph Patterns are standard SPARQL patterns, and their behavior are defined by the SPARQL standard.

Here is a description of the behavior of this example.

The Group Graph Pattern following the FROM keyword defines the following solution set:
{ ( ?seller -> <Greenbushes_Lithium_Operations> ) }

Like any solution mapping in SPARQL, this solution mapping could be written as a VALUES clause in SPARQL, namely:
VALUES ?seller { <Greenbushes_Lithium_Operations> }

The Group Graph Pattern appearing after the ON keyword is a standard Group Graph Pattern in SPARQL, and can be queried by any query engine. This pattern is going to be executed recursively. First, it gets executed as if it had been concatenated with the VALUES clause defined earlier (formally, this corresponds to a JOIN operation):

```
      VALUES ?seller { <Greenbushes_Lithium_Operations> }
      ?event <hasSeller> ?seller
      ?event <hasDate> ?date
      ?event <hasBuyer> ?buyer
      FILTER (?date > "2020-01-01"^^xsd:date).
```

This amounts to a new result set with two results:

```
      {
      ( ?seller -> <Greenbushes_Lithium_Operations>,
      ?event -> Lithium_20134, ?date -> 2022-06-21, ?buyer -> <CATL> )
      ( ?seller -> <Greenbushes_Lithium_Operations>,
      ?event->Lithium_10, ?date -> 2020-03-01, ?buyer ->
 <LG_Energy_Solution_Ltd> )
      }.
```

The WITH clause defines how the recursion happens. In this case, a new set of values for the ?seller variables get extracted from the ?buyer variables of the previous result set. In practice, this means that a new VALUES clause gets extracted, where the values are taken from the ?buyer variable in the previous set:
VALUES ?seller { <CATL> < LG_Energy_Solution_Ltd> }

Once again, the Group Graph Pattern after the ON keyword is queried as if it had been concatenated with this latest VALUES clause, giving a new result set, i.e., a solution set.

This operation is repeated until no more result sets can be found or some depth is reached.

By definition, the result set (i.e., the final solution set) corresponding to executing this whole recursive clause is the union of all result sets obtained by executing the "ON" group graph pattern.

An example of syntax extension is now discussed.

The syntax extension is achieved by adding one or more definitions to the grammar. In the context of SPARQL, the grammar to be modified is:

| | | | |
|---|---|---|---|
| [56] | GraphPattern NotTriples | ::= | GroupOrUnionGraphPattern \| OptionalGraphPattern \| MinusGrap hPattern \| GraphGraphPattern \| ServiceGraphPattern \| Filter Bind \| InlineData |

The syntax extension thus comprises adding a new GGP, named RecursePattern as follows:

| | | | |
|---|---|---|---|
| [56'] | GraphPattern NotTriples | ::= | GroupOrUnionGraphPattern \| OptionalGraphPattern \| MinusGrap hPattern \| GraphGraphPattern \| ServiceGraphPattern \| Filter Bind \| InlineData \| RecursePattern |

wherein RecursePattern is defined as:

| | | | |
|---|---|---|---|
| [61.5] | RecursePattern | ::= | '**RECURSE'** |
| | | | '**FROM'** GroupGraphPattern |
| | | | '**WITH'** ( '(' Expression '**AS'** Var ')')+ |
| | | | '**ON'** GroupGraphPattern |

It is noteworthy that the particular names of the clauses (e.g., "RECURSE", "FROM", "WITH", "AS" and "ON"), as well as their order, may be different in other implementation of the method of the present disclosure.

An example of semantics extension is now discussed.

The semantics of SPARQL is defined in the specification (https://www.w3.org/TR/sparql11-query), and is introduced by the following: "The outcome of executing a SPARQL query is defined by a series of steps, starting from the SPARQL query as a string, turning that string into (a) an abstract syntax form, then turning the abstract syntax into a (b) SPARQL abstract query comprising operators from the SPARQL algebra. This abstract query is then evaluated (c) on an RDF dataset."

A detailed description of the three steps (a), (b) and (c) is now given.
(a) Creating the abstract syntax form means turning a string of symbols into a tree structure that makes explicit the syntactic relations between the symbols: thus, it becomes clear which symbols form "words" and which combination of words form "phrases".
(b) A SPARQL query takes graphs as input and produces solution sets as output. The effect of particular clauses on these solutions is determined by the SPARQL algebra. The algebra consists of operators whose compositionality is mathematically defined. Such an operator is always accompanied by the specification of its evaluation which determines the role of this operator in the next phase (c). In the definition of this evaluation, the operator takes as input a tuple of solution sets and a graph and outputs another solution set. The evaluation of some operators, like some kinds of filters, will take only a solution set as an argument and produce another solution set. The step from (a) to (b) includes reordering, merging of operations and uniformizations, in cases where two clauses in the SPARQL syntax express the input and/or the output in different ways. Thus, the SPARQL algebra, abstracted away from its evaluation, is a second syntactic layer that may directly be interpreted by composing the evaluation specifications.

In this example of the implementation of the method of the present disclosure, therefore, a new operator to be added to the SPARQL algebra reads as:
Recurse: Pattern x Pattern x (Var x Expression)List -> Pattern.

Thus, the name of the new operator in this example of implementation is Recurse. The formula above describes in which configurations the Recurse operator may be introduced. Namely, in configurations where the operation is a parameter in another operation that takes a Pattern as a parameter. Moreover, the Recurse operator may only takes parameters of the form (patternFrom, patternOn, ((var_0, expr_0), (var_1, expr_1), ..., (var_n, expr_n))).
(c) Finally, the evaluation of the Recurse operator is specified. In general, the result of the Recurse operator will be used by other operators. One should be aware that the result of the entire evaluation of a SPARQL query should coincide with the result of the execution by the implementation of the SPARQL language of the same query. The implementation of the SPARQL language is discussed below.

From the formula of the Recurse operator, for the evaluation of a Recurse clause is needed a patternProducer_from, patternProducer_on, a list of n pairs (var_0, expr_0), ..., (var_n, expr_n), and a graph at our disposal. The evaluation of the Recurse clause may use all these elements. The evaluation of the Recurse clause then, is to first evaluate patternProducer_from on the graph, then evaluate patternProducer_on on the graph. They combine their respective results using another operator, e.g., JOIN operator in SPARQL, to obtain an intermediate result pResult_0. Subsequently, one extracts from this result the values of the parameters of each of the expr_i, where expr_i is one of the n expression in the pairs (var_i, expr_i). One creates a new solution set using the result of the evaluation of the expr_i on the extracted solution set. Then, one again "joins" (i.e., combine) with the result of the patternProducer_on. This procedure of extracting, evaluating the expression and joining (i.e., combining) with the result of patternProducer_on is repeated until the new solution set is empty and/or a predetermined number of recursive steps is reached.

An example of the implementation of the Recurse operator is now discussed in detail.

For the query execution, the present algorithm and the transformation from the user input to the Intermediate Representation (IR) are extended with a recursive mechanism. The IR is inspired by the fact that some query engines can generate compiled code as in a Low Level Virtual Machine or LLVM (see, e.g., https://en.wikipedia.org/wiki/LLVM#Intermediate_representation). The code generation is not in the scope of the present method, but it also takes place in the same sources of inspiration from main-memory single-node optimizations as the Vectorization. It thus reuses much of the optimization present in that system.

Referring back to each phase (a), (b) and (c), it is now described how the implementation guarantees a conformant solution.

For (a), the SPARQL parser in production has been extended to include the ability to parse according to syntax extension.

For (b), the implementation is in the spirit of the IR mentioned above. The algebra expression that one obtains is further processed to a directed graph of IR operators, which are called nodes and that are traversed in the specified direction. Importantly, the join (or combination) of a graph pattern A with a basic graph pattern B is transformed into a sequence of nodes in which the node for A is evaluated first and its result is used to optimize the evaluation of the node corresponding to B. For a Recurse clause, the current implementation create nodes for the group graph patterns ggp_from appearing after "FROM" and ggp_on after "ON". Additionally, three supplementary sets of nodes are created: R_gate, R_begin and R_end. The first appears before all nodes of ggp_base, the second, R_begin is inserted in between nodes for ggp_base and nodes for ggp_step. The last type R_end is inserted after all nodes for ggp_step and includes a representation of the information given in the form "Expression AS Variable".

Finally, steered by (c), these operators do the following:
(i) The R_gate node takes the output of the previous nodes in the IR and passes them to the following nodes, as well as to R_begin.
   Subsequently, the nodes produced for ggp_from are executed. Any path through these nodes ends in an R_begin node.
(ii) The R_begin node takes in input variables defined in ggp_from, and those passed to it by R_gate, joins them, and passes them on to the successor node, which is part of the subgraph defined by ggp_on.
   After this, the nodes corresponding to ggp_on are normally traversed until we arrive at an R_end node.
(iii) The R_end node does two things to its input. First, it passes on the input as output to whatever the next node is. Second, it transforms its input according to each "Expression AS Variable" clause and feeds it back into R_begin.

## Claims

1. A computer-implemented method for executing, by a query engine, a linear recursive query on an RDF graph database, the method comprising:
- obtaining (S10) a first part of the query (FROM) that defines as input one or more initial conditions of at least one of query elements in a second part of the query on the RDF graph database;
- obtaining (S20) at least two clauses, the at least two clauses together specifying that the second part of the query will be executed recursively:
-- a first clause (WITH) defining how an output of an execution of the second part of the query is used as an input of a next execution of the second part of the query, and
-- a second clause (ON) defining the second part of the query, the second clause comprising the query elements describing how the output of an execution of the second part is queried using (i) the input of the one or more initial conditions for an initial execution of the second part of the query or (ii) the output of a previous execution of the second part of the query for the next execution of the second part of the query.

2. The computer-implemented method of claim 1, wherein the obtained first part of the query (FROM) comprises a first group graph pattern defining the one or more initial conditions, each initial condition comprising one or more variable(s), each variable being assigned to an initial value, the first group graph pattern being a syntactic expression.

3. The computer-implemented method of any one of claims 1 to 2, wherein the output of an execution of the second part of the query comprises a set of solutions, a solution comprising a set of variables assigned to a respective set of values, the first clause (WITH):
- extracting one or more values from the set of solutions according to one or more expressions; and
- assigning the extracted one or more values to one or more respective variables used as the input of the next execution of the second part of the query.

4. The computer-implemented method of any one of claims 1 to 3, wherein the second clause (ON) comprises a second group graph pattern being a syntactic expression.

5. The computer-implemented method of any one of claims 1 to 4, wherein:
- the first part of the query (FROM) is executed by a first operator (ggp_from), which assigns the one or more initial conditions;
- the first clause (WITH) comprises the one or more expressions for the one or more respective variables used as the input of the next execution of the second part of the query; and/or
- the second clause (ON) is executed by a second operator (ggp_on), which recursively executes the query elements and outputs, for each execution, a respective set of solutions.

6. The computer-implemented method of claim 5, further comprising:
- a gate operator (R_gate) transferring a previous set of solutions from a preceding execution to the first operator and to a begin operator (R_begin);
- the begin operator (R_begin) taking as input the one or more initial conditions and the previous set of solutions, combining the previous set of solutions and the one or more initial conditions, and transfers them to the second operator;
- an end operator (R_end) taking as input the respective set of solutions from the second operator, extracting the one or more values from the previous set of solutions according to the one or more expressions for the one or more variables used as the input of the next execution, and assigning the extracted one or more values to the one or more respective variables used as the input of the next execution of the second part of the query.

7. The computer-implemented method of any one of claims 1 to 6, wherein the execution of the second part of the query is executed repeatedly:
- until the set of solutions is empty; and/or
- until a predetermined number of recursive steps is reached.

8. The computer-implemented method of claims 1 to 7, wherein obtaining the first clause (WITH) further comprises assigning, with a clause (AS), the extracted one or more values of the one or more expressions to the one or more respective variables, the clause (AS) being combined with the first clause (WITH).

9. The computer-implemented method of claim 8, wherein the linear recursive query is executed by a linear recursive pattern (RECURSE), the linear recursive pattern having a SPARQL grammar of the type:
RECURSE
FROM {Group Graph Pattern}
WITH( ( Expression AS Variable ) )
ON {Group Graph Pattern}.

10. The computer-implemented method of claim 9, wherein the linear recursive pattern further comprises a fourth clause (FILTER), the fourth clause (FILTER) defining a filter on the set of solutions based on one or more constraints, the linear recursive pattern having a SPARQL grammar of the type:
RECURSE
FROM {Group Graph Pattern}
WITH( ( Expression AS Variable ) )
ON {Group Graph Pattern,
FILTER (Variable + Constraint)}.

11. The computer-implemented method of any one of claims 1 to 10, wherein the query engine is a SPARQL query engine.

12. A computer program comprising instructions that, when executed by a processing unit, cause the computer to perform the method according to any one of claims 1 to 11.

13. A computer readable storage medium having recorded thereon the computer program of claim 12.

14. A system comprising a processor coupled to a memory, the memory having recorded thereon the computer program of claim 12.
